# EUROPÄISCHE PATENTANMELDUNG

(11) **EP 1 826 429 A1**
(43) Veröffentlichungstag der Anmeldung: **29.08.2007**
(21) Anmeldenummer: 07001848.6
(22) Anmeldetag: 29.01.2007
(51) Int. Cl.: F16D 13/58, F16D 13/64, F16D 13/72

(54) **Kupplungsbaugruppe mit einem Ölpumpenkupplungsgehäuse und einem am Außenumfang eines Kupplungspakets eingekuppelten Träger**

(30) Priorität: 22.02.2006 US 775621 P
(71) Anmelder: LuK Lamellen und Kupplungsbau Beteiligungs KG, 77815 Bühl (DE)
(72) Erfinder: Uhler, Adam, Sterling, Ohio 44276 (US); George, Philip, Wooster, Ohio 44691 (US); Sturgin, Todd, Shreve, Ohio 44676 (US)

(57) **Zusammenfassung**

Die vorliegende Erfindung umfasst im Allgemeinen einen Ringträger (10) mit einer Wand (12), die so angeordnet ist, dass sie mindestens an einem Teil eines äußeren Umfangs eines Kupplungspakets für eine Kupplungsbaugruppe für ein Fahrzeug einkuppelt, und ein Kupplungsgehäuse (100) mit einer Wand (102), die so angeordnet ist, dass sie mindestens an einem Teil eines inneren Umfangs des Kupplungspakets einkuppelt. Die Wand (102) des Gehäuses (100) enthält mindestens eine Öffnung (116), und das Kupplungsgehäuse (100) ist so angeordnet, dass es unabhängig von der Rotation einer Ausgangsnabe für den Träger Flüssigkeit durch die Öffnung (116) in der Wand pumpt. Das Kupplungsgehäuse (100) kann als ein inneres Kupplungsgehäuse ausgeführt sein. Das Kupplungsgehäuse (100) enthält einen Verbindungsteil, der so angeordnet ist, dass er von einem Außengehäuse der Kupplungsbaugruppe, das mit der Kurbelwelle eines Motors verbunden ist, ein Drehmoment des Motors zur zylindrischen Wand überträgt. Die vorliegende Erfindung beinhaltet auch eine Kupplungsbaugruppe mit einem Ringträger (10) und einem Kupplungsgehäuse (100).

## Beschreibung

### QUERVERWEIS AUF ZUGRUNDE LIEGENDE ANMELDUNGEN

Die vorliegende Erfindung Anmeldung beansprucht die Rechte nach 35 U.S.C. §119(e) der US-Patentanmeldung Nr. 60/775 621, eingereicht am 22. Februar 2006.

### GEBIET DER ERFINDUNG

Die Erfindung betrifft Verbesserungen an Vorrichtungen zur Kraftübertragung zwischen einer rotatorischen Antriebseinheit (wie beispielsweise dem Motor einer Motorfahrzeugs) und einer rotatorisch angetriebenen Einheit (wie beispielsweise einem Automatikgetriebe im Motorfahrzeug). Insbesondere betrifft die Erfindung ein Kupplungsgehäuse, das an einem Innenumfang eines Kupplungspaket einkuppelt, und einen Ringträger, der an einem Außenumfang eines Kupplungspakets einkuppelt. Ferner betrifft die Erfindung ein Kupplungsgehäuse, das so angeordnet ist, dass es Flüssigkeit durch Löcher in einer Wand des Gehäuses gepumpt wird, wenn eine Kurbelwelle rotiert.

### HINTERGRUND DER ERFINDUNG

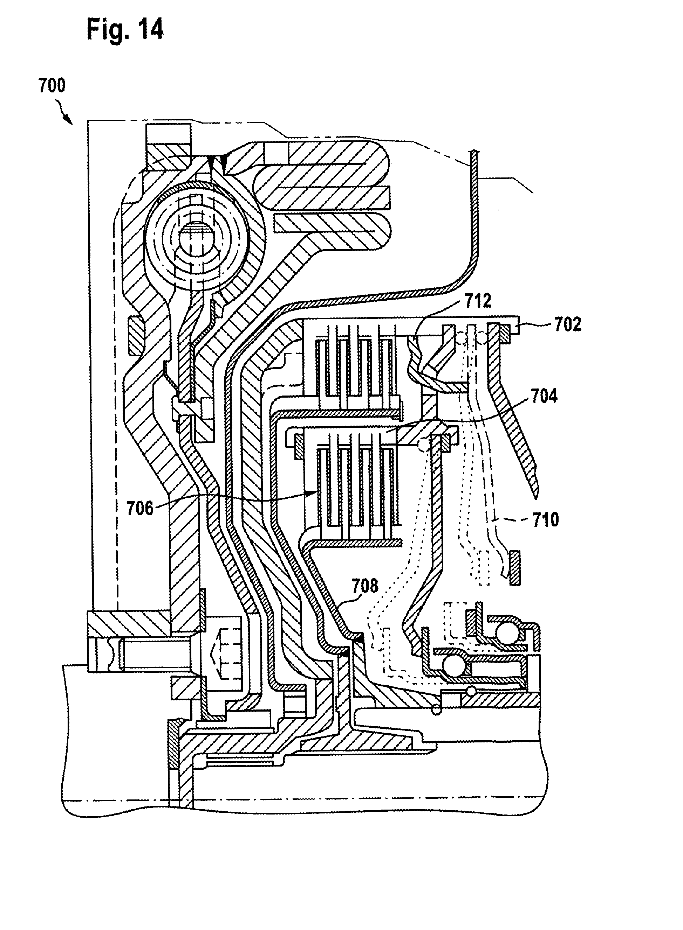

Fig. 14 zeigt eine Doppelkupplungsbaugruppe 700 aus der an denselben Anmelder abgetretenen und daher nicht anzuführenden US-Patentanmeldung Nr. 2005/0 139 442, eingereicht am 23. Dezember 2004 und veröffentlicht am 30. Juni 2005, die hier durch Bezugnahme einbezogen ist. In Fig. 14 ist ein Kupplungsgehäuse 702 mit einem äußeren Gehäuse 704 verbunden. Ein Drehmoment des Motors wird zum Gehäuse 704 und zum Gehäuse 702 übertragen. Das Gehäuse 702 überträgt das Drehmoment zu den Kupplungsscheiben 706. Die Kupplungsscheiben wiederum übertragen das Drehmoment im eingekuppelten Zustand zum Träger 708. In der Wand des Trägers sind Öffnungen vorgesehen, damit Öl durch die Baugruppe strömen kann. Durch die Rotation des Trägers wird eine Fliehkraft erzeugt, die das Pumpen des Öls durch die Öffnungen unterstützt. Der Träger rotiert nur dann, wenn das Kupplungspaket eingekuppelt ist. Zum Einkuppeln der Scheiben im Kupplungspaket wird zum Beispiel eine axiale Kraft ausgeübt. Die Scheiben im Kupplungspaket durchlaufen eine Schlupfphase und kuppeln danach vollständig ein.

Parallel dazu beginnt der Träger zu rotieren, wobei die Rotation während der Schlupfphase zunimmt und bei vollständig eingekuppelten Kupplungsscheiben mit dem vom Motor übertragenen Drehmoment synchron ist. Die größte Wärmemenge wird während der Schlupfphase freigesetzt, sodass während der Schlupfphase besonders hohe Anforderungen an die Ölkühlung gestellt werden. Die Anforderungen an die Ölkühlung sind daher zu Beginn der Schlupfphase üblicherweise am höchsten. Der Ölstrom nimmt zu, wenn die Pumpwirkung des Trägers während der Schlupfphase größer wird.

Die Baugruppe 700 verwendet Hebelfedern, zum Beispiel die Feder 710, welche die zum Einkuppeln der Scheiben in einem Kupplungspaket erforderliche axiale Kraft zu erzeugen. Üblicherweise dienen separate Stützhebelelemente wie beispielsweise das Element 712 zur Übertragung einer axialen Kraft von den Federn auf die Kupplungspakete. Wenn auf den Stützhebel verzichtet würde, könnten die Anzahl der Teile, die Kosten und die Komplexität eines Kupplungsbaugruppe verringert werden.

Somit besteht seit langem ein Bedarf an der Verstärkung des Ölstroms durch ein Kupplungsgehäuse, während die Scheiben in einem Kupplungspaket des Gehäuses rutschen. Ferner besteht seit langem ein Bedarf an einem vereinfachten Mittel zur Übertragung einer axialen Kraft von einer Hebelfeder zu einem Kupplungspaket in einem Kupplungsgehäuse.

### KURZZUSAMMENFASSUNG DER ERFINDUNG

Allgemein betrifft die vorliegende Erfindung einen Ringträger mit einer im Wesentlichen zylindrischen Wand, der so angeordnet ist, dass er mindestens an einem Teil eines Außenumfangs eines Kupplungspakets einer Kupplungsbaugruppe für ein Fahrzeug einkuppelt. Der Träger enthält auch eine Ausgangsnabe. Das Kupplungspaket beinhaltet einen Innenumfang und die Baugruppe beinhaltet gemäß einigen Aspekten ein Kupplungsgehäuse, das so angeordnet ist, dass es am Innenumfang einkuppelt.

Allgemein umfasst die vorliegende Erfindung auch ein Kupplungsgehäuse mit einer im Wesentlichen zylindrischen Wand, das so angeordnet ist, dass es mindestens an einem Teil eines Innenumfangs eines Kupplungspakets einer Kupplungsbaugruppe für ein Fahrzeug einkuppelt. Die zylindrische Wand enthält mindestens eine Öffnung, die Baugruppe enthält eine Flüssigkeit und eine rotierende Ausgangsnabe, und das Kupplungsgehäuse ist so angeordnet, dass es die Flüssigkeit unabhängig von der Rotation der Ausgangsnabe durch die mindestens eine Öffnung pumpt. Das Kupplungsgehäuse ist so angeordnet, dass es die Flüssigkeit durch die mindestens eine Öffnung pumpt, wenn ein Außengehäuse der Baugruppe rotiert. Das Außengehäuse ist mit einer Kurbelwelle des Motors für das Fahrzeug und mit dem Kupplungsgehäuse verbunden. Gemäß einigen Aspekten ist das Kupplungsgehäuse als inneres Kupplungsgehäuse der Baugruppe angeordnet.

Allgemein umfasst die vorliegende Erfindung ferner eine Kupplungsbaugruppe für ein Fahrzeug mit einem Kupplungsgehäuse, das so angeordnet ist, dass es an einem Innenumfang eines Kupplungspakets einkuppelt, und mit einem Träger, der so angeordnet ist, dass er an einem Außenumfang des Kupplungspakets einkuppelt. Der Träger weist eine im Wesentlichen zylindrische Trägerwand auf, die so angeordnet ist, dass sie am Außenumfang einkuppelt. Das Kupplungsgehäuse enthält eine im Wesentlichen zylindrische Gehäusewand, die so angeordnet ist, dass sie am Innenumfang einkuppelt. Gemäß einigen Aspekten enthält die Baugruppe eine Flüssigkeit, enthält der Träger eine rotierende Ausgangsnabe, enthält die Gehäusewand mindestens eine Öffnung und ist das Kupplungsgehäuse so angeordnet, dass unabhängig von der Rotation der Ausgangsnabe die Flüssigkeit durch die mindestens eine Öffnung gepumpt wird. Das Kupplungsgehäuse ist auch so angeordnet, dass die Flüssigkeit immer dann durch die mindestens eine Öffnung gepumpt wird, wenn ein Außengehäuse der Baugruppe rotiert. Das Außengehäuse ist mit einer Kurbelwelle des Fahrzeugmotors und mit dem Kupplungsgehäuse verbunden.

Das Kupplungsgehäuse ist so angeordnet, dass es ein Drehmoment vom Motor zum Kupplungspaket überträgt. Ferner umfasst das Kupplungsgehäuse eine ringförmige Gehäusescheibe, die mit dem Außengehäuse der Baugruppe verbunden ist. Das Außengehäuse ist mit einer Kurbelwelle des Fahrzeugmotors verbunden. Gemäß einigen Aspekten enthält die erste ringförmige Gehäusescheibe mindestens einen Verbindungspunkt, beinhaltet die Baugruppe einen mit dem Kupplungspaket und einer ersten Hebelfeder eingekuppelten Stützhebel, weist die erste Hebelfelder einen an dem mindestens einen Verbindungspunkt eingekuppelten Außenumfang auf und ist die erste Feder so angeordnet, dass sie am Stützhebel einkuppelt. Gemäß einigen Aspekten beinhaltet die Baugruppe eine zweite Hebelfeder und beinhaltet das Kupplungsgehäuse eine zweite ringförmige Scheibe mit einem Stützhebelteil, der so angeordnet ist, dass er an der zweiten Hebelfeder einkuppelt, und mit einem Kupplungsteil, der so angeordnet ist, dass er am Kupplungspaket einkuppelt. Gemäß einigen Aspekten ist das Kupplungsgehäuse ein inneres Kupplungsgehäuse.

Allgemein umfasst die vorliegende Erfindung auch ein Verfahren zum Optimieren eines Flüssigkeitsstroms durch ein Kupplungsgehäuse in einer Kupplungsbaugruppe in einem Fahrzeug.

Eine allgemeine Aufgabe der vorliegenden Erfindung besteht darin, ein Kupplungsgehäuse bereitzustellen, das unabhängig von der Rotation einer Ausgangswelle einer Baugruppe des Kupplungsgehäuses eine Kühlflüssigkeit pumpen kann.

Eine andere Aufgabe der vorliegenden Erfindung besteht darin, ein Kupplungsgehäuse bereitzustellen, das eine Kühlflüssigkeit immer dann pumpen kann, wenn eine zu einer Kupplungsbaugruppe für das Kupplungsgehäuse gehörige Kurbelwelle rotiert.

Eine weitere Aufgabe der vorliegenden Erfindung besteht darin, ein Kupplungsgehäuse bereitzustellen, das eine maximale Strömungsmenge des Öls erzeugt, während sich die Scheiben in einem Kupplungspaket des Gehäuses in der Schlupfphase befinden.

Diese sowie weitere Aufgaben und Vorteile werden dem Fachmann aus der folgenden Beschreibung bevorzugter Ausführungsarten der Erfindung und aus den beiliegenden Zeichnungen und Ansprüchen klar.

### KURZBESCHREIBUNG DER ZEICHNUNGEN

In der folgenden ausführlichen Beschreibung werden das Wesen und die Funktionsweise der vorliegenden Erfindung in Verbindung mit den beiliegenden Figuren umfassend beschrieben, wobei:
Fig. 1 eine perspektivische Rückansicht eines Ringträgers der vorliegenden Erfindung ist;
Fig. 2 eine Rückansicht des in Fig. 1 gezeigten Ringträgers ist;
Fig. 3 eine Seitenansicht des in Fig. 1 gezeigten Ringträgers ist;
Fig. 4 eine perspektivische Rückansicht eines Kupplungsgehäuses der vorliegenden Erfindung ist;
Fig. 5 eine Rückansicht des in Fig. 4 gezeigten Kupplungsgehäuses ist;
Fig. 6 eine Seitenansicht des in Fig. 4 gezeigten Kupplungsgehäuses ist;
Fig. 7 eine Rückansicht einer ersten Doppelkupplungsbaugruppe der vorliegenden Erfindung in Explosionsdarstellung ist;
Fig. 8 eine Seitenansicht der in Fig. 7 gezeigten Baugruppe ist;
Fig. 9 eine Querschnittsansicht der Baugruppe in Fig. 7 entlang der Schnittlinie 9 - 9 in Fig. 8 ist;
Fig. 10 eine Querschnittsansicht der Baugruppe in Fig. 7 ist, bei der nur die Querschnittsflächen sichtbar sind;
Fig. 11 eine Querschnittsansicht einer zweiten Doppelkupplungsbaugruppe der vorliegenden Erfindung ist;
Fig. 12 eine Querschnittsansicht einer dritten Doppelkupplungsbaugruppe der vorliegenden Erfindung ist;
Fig. 13 eine Querschnittsansicht einer vierten Doppelkupplungsbaugruppe der vorliegenden Erfindung ist; und
Fig. 14 eine Doppelkupplungsbaugruppe aus der an denselben Anmelder übertragenen US-Patentanmeldung ist; und
Fig. 15 ein Ablaufplan ist, der ein Verfahren gemäß der vorliegenden Erfindung zur Optimierung eines Flüssigkeitsstroms durch ein Kupplungsgehäuse in einer Kupplungsbaugruppe in einem Fahrzeug veranschaulicht.

### DETAILLIERTE BESCHREIBUNG DER ERFINDUNG

Von vornherein sollte klar sein, dass gleiche Bezugsnummern in verschiedenen Zeichnungsansichten identische oder funktionell ähnliche Strukturelemente der Erfindung bezeichnen. Obwohl die vorliegende Erfindung unter Bezug auf die gegenwärtig als bevorzugt angesehenen Aspekte beschrieben wird, sollte klar sein, dass die beanspruchte Erfindung nicht auf die beschriebenen Aspekte beschränkt ist.

Außerdem sollte klar sein, dass diese Erfindung nicht auf bestimmte beschriebene Verfahren, Materialien und Modifikationen beschränkt ist und insofern natürlich variieren kann. Ferner sollte klar sein, dass die hier verwendete Terminologie nur der Beschreibung bestimmter Aspekte dient und den Geltungsbereich der vorliegenden Erfindung nicht einschränken soll, der nur durch die angehängten Ansprüche eingeschränkt wird.

Wenn nicht anders erwähnt, haben alle hier verwendeten technischen und wissenschaftlichen Begriffe dieselbe Bedeutung, wie sie einem Fachmann geläufig sind, an den diese Erfindung gerichtet ist. Obwohl zur Ausführung oder zum Testen der Erfindung beliebige Verfahren, Vorrichtungen oder Materialien verwendet werden können, die den hier beschriebenen ähnlich oder gleichwertig sind, werden im Folgenden die bevorzugten Verfahren, Vorrichtungen und Materialien beschrieben.

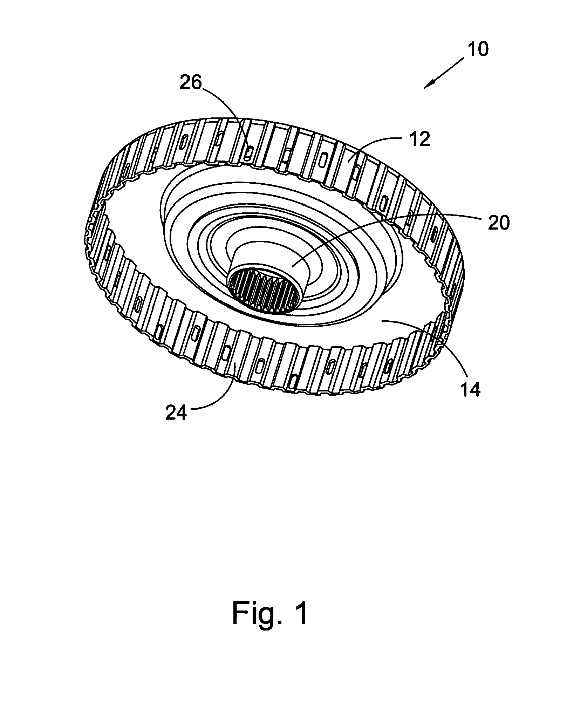

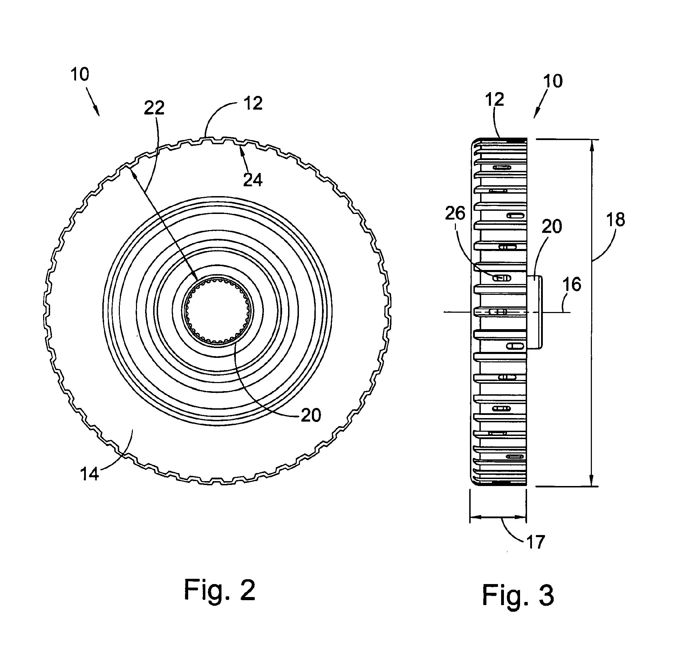

Die Figuren 1, 2 und 3 sind eine perspektivische Rückansicht, eine Rückansicht bzw. eine Seitenansicht des Ringträgers 10. Die folgende Beschreibung ist in Verbindung mit den Figuren 1 bis 3 zu sehen. Der Ringträger 10 beinhaltet eine Ringträgerwand 12 und einen Ausgangsverbindungsabschnitt 14. Allgemein ist die Wand 12 im Wesentlichen zylindrisch um die Längsachse 16 herum angeordnet. Obwohl an der Wand 12 Keile oder andere Oberflächenmerkmale gebildet sein können, bedeutet dies, dass die Wand, die Keile oder anderen Oberflächenmerkmale zylindrisch angeordnet sind. Es sollte jedoch klar sein, dass die Wand 12 nicht auf die in den Figuren dargestellte Form beschränkt ist und dass Geist und Geltungsbereich der beanspruchten Erfindung andere Formen der Wand 12 beinhalten. Zum Beispiel ist die Wand 12 nicht auf eine bestimmte Höhe 17 oder einen bestimmten Durchmesser 18 beschränkt. Insbesondere erstreckt sich der Bereich 14 in Bezug auf die Wand 12 und die Achse 16 von der Wand weg radial nach innen und ist mit der Ausgangsnabe 20 verbunden. Der Ringträger 10 wird im Folgenden in Verbindung mit der Kupplungsbaugruppe beschrieben. Die Wand und der Bereich Nabe 14 bilden in den Figuren ein Teil oder sind aus ein und demselben Materialstück gebildet. Es sollte jedoch klar sein, dass die Wand und der Abschnitt aus miteinander verbundenen Einzelteilen gebildet sein können. Solche Teile können durch beliebige in der Technik bekannte Mittel, unter anderem, aber nicht ausschließlich, durch Schweißen, Nieten oder Presspassung, angebracht, befestigt oder miteinander verbunden werden.

Gemäß einigen Aspekten bildet der Abschnitt 14 von der Wand 12 bis zur Nabe 20 ein durchgehendes/zusammenhängendes Teil. Es sollte klar sein, dass der Abschnitt 14 nicht auf die in den Figuren dargestellte Form beschränkt ist und dass Geist und Geltungsbereich der beanspruchten Erfindung andere Formen für den Abschnitt 14 beinhalten. Zum Beispiel ist der Abschnitt 14 nicht auf eine bestimmte Radiusgröße 22 beschränkt. Gemäß einigen (nicht gezeigten) Aspekten wird der Abschnitt 14 aus zwei oder mehr fest miteinander verbundenen Segmenten oder Teilen gebildet. Die zwei oder mehr Segmente sind durch ein beliebiges in der Technik bekanntes Mittel, beispielsweise, aber nicht ausschließlich, durch Schweißen oder Nieten, miteinander verbunden. Die Nabe 20 kann durch ein beliebiges in der Technik bekanntes Mittel, darunter, aber nicht ausschließlich, durch Nieten oder Schweißen, mit dem Abschnitt 14 verbunden sein. Die Nabe 20 ist so beschaffen, dass sie durch ein beliebiges in der Technik bekanntes Mittel, z.B., aber nicht ausschließlich, durch Keile, Kerben, Schweißen oder Nieten, mit einer Eingangswelle eines (nicht gezeigten) Getriebes verbunden ist.

Der in eine Kupplungsbaugruppe eingebaute Ringträger 10 ist so angeordnet, dass er ein (nicht gezeigtes) Kupplungspaket aufnimmt und an diesem einkuppelt. Üblicherweise wird der Ringträger 10 in einem inneren Kupplungsgehäuse in einer Kupplungsbaugruppe eingesetzt, jedoch sollte klar sein, dass Geist und Geltungsbereich der beanspruchten Erfindung andere Verwendungsarten für den Ringträger beinhalten. Insbesondere weist die Wand 12 eine Innenfläche 24 auf, die so angeordnet ist, dass sie mindestens an einem Teil eines äußeren Umfangs des Kupplungspakets einkuppelt. Zum Einkuppeln der Fläche 24 am Kupplungspaket können beliebige in der Technik bekannte Mittel verwendet werden, zum Beispiel einander ergänzende Keile und Nuten. Gemäß einigen Aspekten wird der Träger in einer Kupplungsbaugruppe mit einem (nicht gezeigten, aber im Folgenden beschriebenen) Kupplungsgehäuse verwendet, das an einem inneren Umfang des Kupplungspakets einkuppelt. Die Wand des Ringträgers 10 ist so angeordnet, dass sie ein Drehmoment des Motors vom Kupplungspaket aufnimmt und über das Segment 14 zur Ausgangswelle 20 überträgt. Das Gehäuse nimmt das Drehmoment vom Motor auf und überträgt es zum Kupplungspaket. Bei der in Fig. 14 gezeigten Anordnung hingegen nimmt das Innengehäuse der Kupplung das Drehmoment auf und überträgt es zum äußeren Umfang des Kupplungspakets. Gemäß einigen Aspekten ermöglichen Öffnungen 26 in der Wand 12 das Durchströmen von Kühlflüssigkeit.

Gemäß einigen Aspekten ist der Ringträger 10 gestanzt, sodass die Fertigungskosten und die Komplexität geringer sind. Es sollte jedoch klar sein, dass zur Herstellung des Ringträgers 10 andere Fertigungsverfahren eingesetzt werden können.

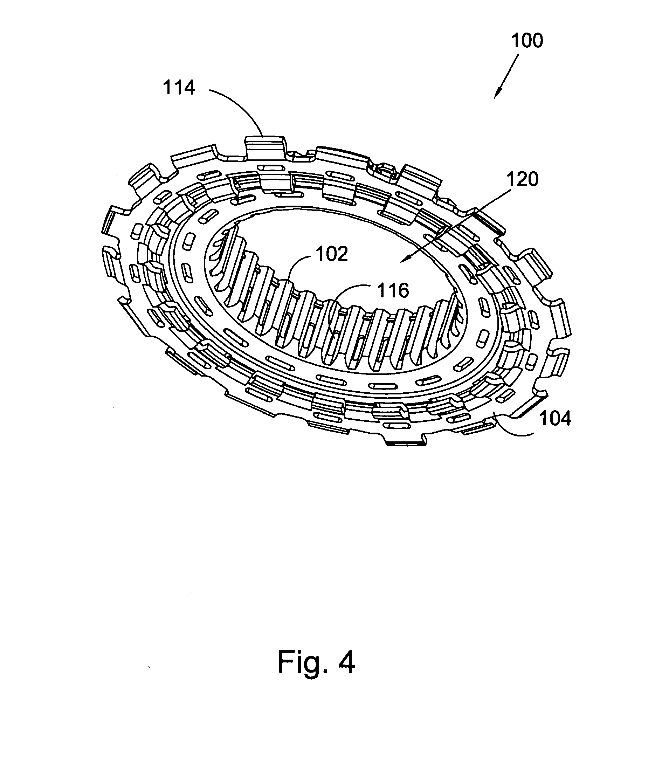

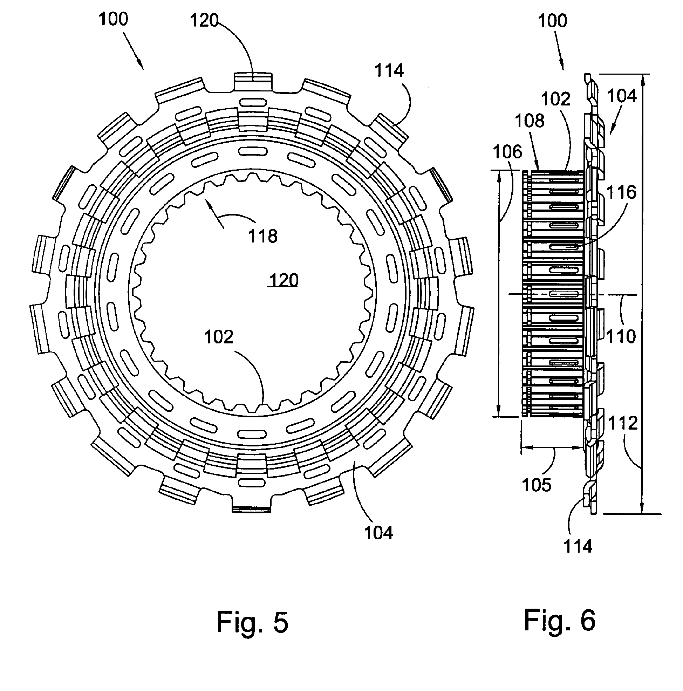

Die Figuren 4, 5 und 6 sind eine perspektivische Rückansicht, eine Rückansicht bzw. eine Seitenansicht des Kupplungsgehäuses 100 der vorliegenden Erfindung. Die folgende Beschreibung ist in Verbindung mit den Figuren 4 bis 6 zu sehen. Das Kupplungsgehäuse 100 enthält eine Wand 102 und einen Verbindungsteil 104. Die Wand 102 ist im Wesentlichen zylindrisch, wie bereits bei der Wand 12 in den Figuren 1 bis 3 beschrieben wurde. Es sollte jedoch klar sein, dass die Wand 102 nicht auf die in den Figuren dargestellte Form beschränkt ist und dass Geist und Geltungsbereich der beanspruchten Erfindung andere Formen beinhalten. Zum Beispiel ist die Wand 102 nicht auf eine bestimmte Höhe 105 oder einen bestimmten Durchmesser 106 beschränkt. Die Wand 102 und insbesondere die Außenfläche 108 ist so angeordnet, dass sie mindestens an einem Teil eines inneren Umfangs eines (nicht gezeigten) Kupplungspakets für ein (nicht gezeigtes) Kupplungsgehäuse einkuppelt. Das Kupplungsgehäuse 100 wird im Folgenden in Verbindung mit einer Kupplungsbaugruppe beschrieben.

Der Teil 104 ist so angeordnet, dass er ein Drehmoment des Motors zur Wand 102 überträgt. Gemäß einigen Aspekten ist der Teil 104 eine im Wesentlichen rechtwinklig zur Wand 102 um die Längsachse 110 herum angeordnete ringförmige Scheibe. Es sollte jedoch klar sein, dass der Teil 104 nicht auf die in den Figuren dargestellte Form beschränkt ist und dass Geist und Geltungsbereich der beanspruchten Erfindung andere Formen für den Teil 104 beinhalten. Zum Beispiel ist der Teil 104 nicht auf einen bestimmten Durchmesser 112 beschränkt. Gemäß einigen Aspekten ist die (nicht gezeigte) Kurbelwelle für ein (nicht gezeigtes) Fahrzeug, in welchem die Kupplungsbaugruppe eingebaut ist, mit einem Außengehäuse der Baugruppe verbunden. Das Drehmoment vom Fahrzeugmotor wird von der Kurbelwelle zum Außengehäuse des Kupplungsgehäuses 100 übertragen. Die Verbindung des Kupplungsgehäuses 100 mit einem Außengehäuse wird im Folgenden erörtert.

Die Wand 102 enthält mindestens eine Öffnung 116. Das Kupplungsgehäuse 100 ist nicht auf die dargestellte Anzahl, Größe, Anordnung und Ausrichtung der Öffnungen beschränkt, und es sollte klar sein, dass Geist und Geltungsbereich der beanspruchten Erfindung andere Anzahlen, Größen, Anordnungen und Ausrichtungen der Öffnungen beinhalten. Eine Nasskupplungsbaugruppe enthält eine Flüssigkeit, normalerweise ein Öl, zur Kühlung der Kupplungsbaugruppe, insbesondere der Kupplungen oder Kupplungspakete in der Baugruppe. Die Öffnungen 116 können so angeordnet sein, dass sie das Durchströmen einer Flüssigkeit von der Öffnung 120 von der Achse 110 aus in radialer Richtung nach außen, zum Beispiel in Richtung 118, zum äußeren Umfang ermöglichen. Durch die Rotation des Kupplungsgehäuses 100 um die Achse 110 wird eine Zentrifugalkraft in Richtung 118 erzeugt.

Gemäß einigen Aspekten ist das Kupplungsgehäuse 100 gestanzt, wodurch die Fertigungskosten und die Komplexität verringert werden. Es sollte jedoch klar sein, dass zur Bildung des Kupplungsgehäuses 100 andere Fertigungsverfahren eingesetzt werden können.

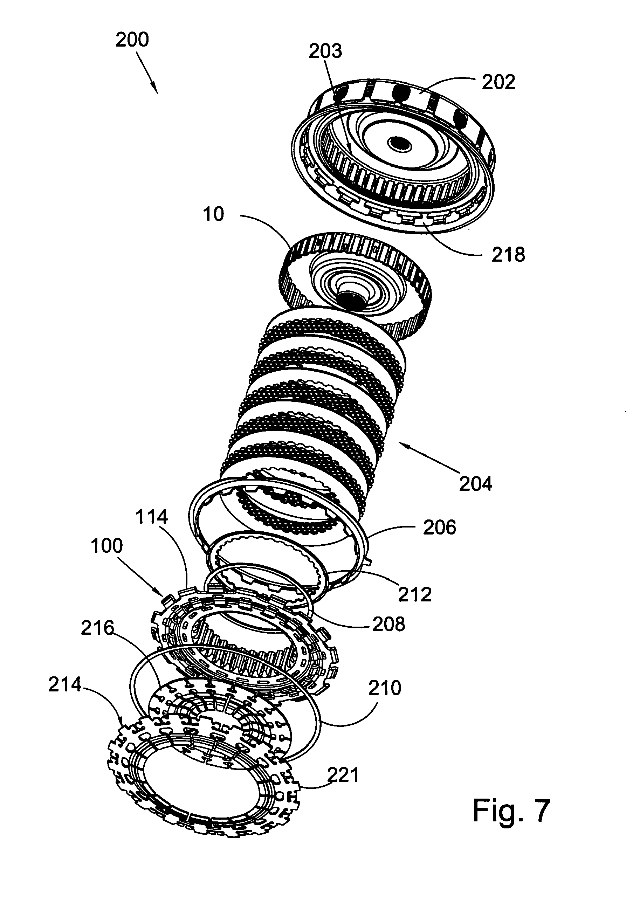

Fig. 7 ist eine Rückansicht der Doppelkupplungsbaugruppe 200 der vorliegenden Erfindung in Explosionsdarstellung.

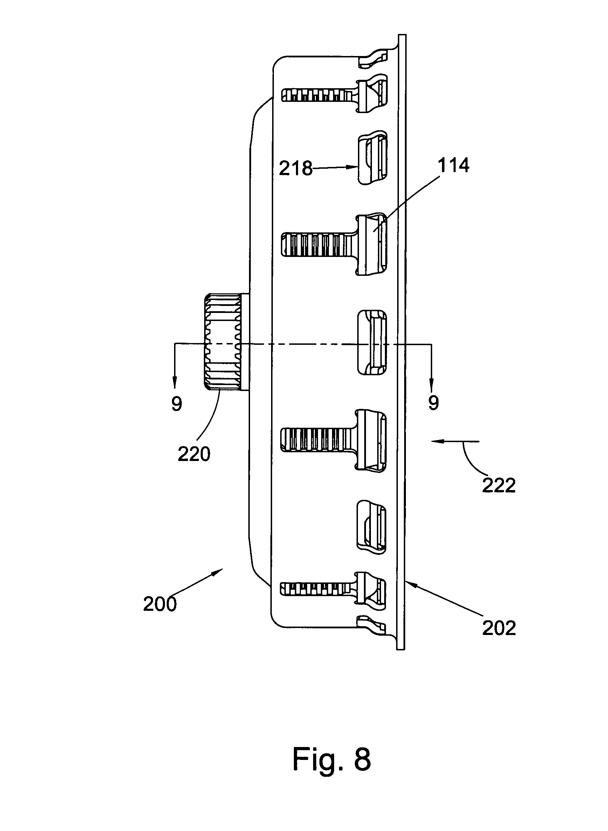

Fig. 8 ist eine Seitenansicht der Baugruppe 200.

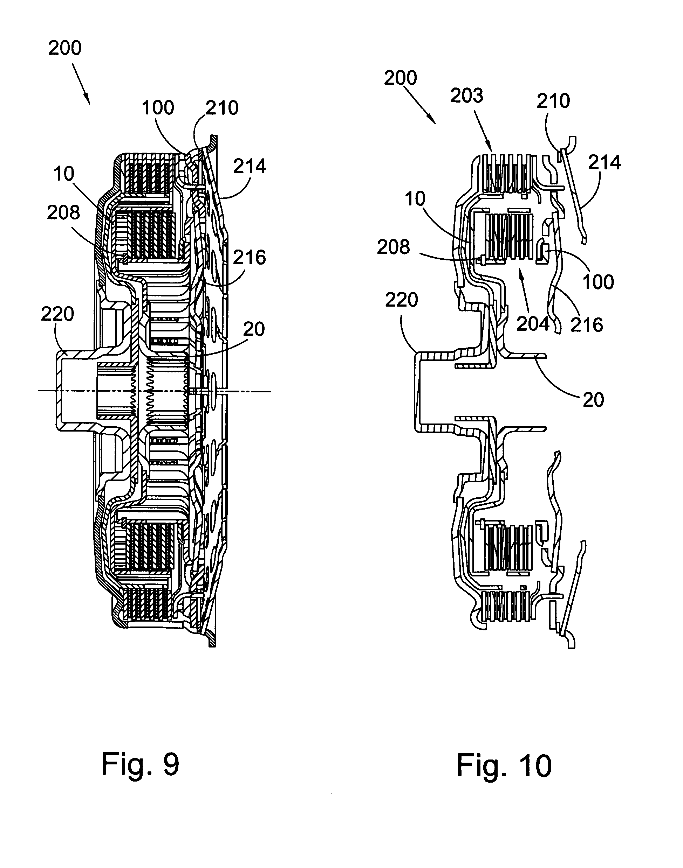

Fig. 9 ist eine Querschnittsansicht der Baugruppe 200 entlang der Schnittlinie 9 - 9 in Fig. 8.

Fig. 10 ist eine Querschnittsansicht der Baugruppe 200, bei der nur die Querschnittsflächen sichtbar sind. Die folgende Beschreibung ist in Verbindung mit den Figuren 1 bis 10 zu sehen. Die Baugruppe 200 beinhaltet einen Ringträger 10 und ein Kupplungsgehäuse 100. Ferner beinhaltet die Baugruppe ein Außengehäuse 202, ein (innerhalb des Gehäuses 202 dargestelltes) Kupplungspaket 203, ein Kupplungspaket 204, einen Stützring 206, Sprengringe 208 und 210, einen Stützring 212, eine äußere Hebelfeder 214 und eine innere Hebelfeder 216. Die Baugruppe 200 nach einem beliebigen in der Technik bekannten Verfahren gebildet werden. Deshalb sollte klar sein, dass die vorliegende Erfindung nicht auf die Verwendung der für die Baugruppe 200 dargestellten Anzahl, Typen und Anordnung von Komponenten beschränkt ist und dass für die vorliegende Erfindung andere Anzahlen, Typen und Anordnungen von Komponenten verwendet werden können.

Es sollte klar sein, dass beliebige in der Technik bekannte Mittel, zum Beispiel einander ergänzende Keile und Kerben oder Schweißen, verwendet werden können, um das Kupplungsgehäuse 100 mit dem Außengehäuse 202 zu verbinden. Gemäß einigen Aspekten kann außerdem eine Anordnung von Zungen und Schlitzen verwendet werden, wie sie in der an denselben Anmelder abgetretenen US-Patentanmeldung mit dem Titel "Clutch Housing with Wide Lever Spring Retention Slots and Clutch Housing with Axially Off-set Tabs" von Adam Uhler, eingereicht am selben Tag wie die vorliegende Erfindung, beschrieben wird. Zum Beispiel kuppeln die Zungen 114 an den Öffnungen 218 im Gehäuse 202 ein, um die Rotation zwischen dem Kupplungsgehäuse 100 und dem Gehäuse 202 zu sperren. Die Nabe 220 ist mit einer (nicht gezeigten) Kurbelwelle eines Motors verbunden, und das vom Motor kommende Drehmoment wird über die Öffnungen 218 und die Zungen 114 von der Nabe 220 zum Kupplungsgehäuse 100 übertragen. Zum Verbinden der Nabe 220 mit der Kurbelwelle kann ein beliebiges in der Technik bekanntes Mittel verwendet werden. Der Ringträger 10 und das Gehäuse 100 sind durch ein beliebiges in der Technik bekanntes Mittel, zum Beispiel durch eine Anordnung von Keilen und Kerben, miteinander verbunden.

Die Feder 214 kann unter Verwendung eines beliebigen in der Technik bekannten Mittels am Gehäuse 202 eingekuppelt werden. Gemäß einigen Aspekten kann außerdem auch eine Anordnung von Federzungen und Schlitzen im Gehäuse verwendet werden, das in der an denselben Anmelder abgetretenen US-Patentanmeldung mit dem Titel "Clutch Housing with Lever Spring Retention Slots and Method of Installing a Lever Spring" von Todd Sturgin und Adam Uhler, eingereicht am selben Tag wie die vorliegende Erfindung, beschrieben wird. Zum Beispiel werden Zungen 221 der Feder 214 in Öffnungen 218 eingesetzt.

Wenn durch die Feder 216 eine Kraft in axialer Richtung 222 auf das Kupplungspaket 204 ausgeübt wird, kuppelt das Kupplungspaket ein, und des Drehmoment wird vom Motor zum Ringträger 10 übertragen. Die Nabe 20 ist mit einer Eingangswelle eines (nicht gezeigten) Getriebes verbunden und überträgt das Drehmoment zur Welle. Zum Verbinden der Nabe 20 mit der Welle kann ein beliebiges in der Technik bekanntes Mittel verwendet werden.

Es sollte klar sein, dass zum Verbinden des Kupplungspakets 203 mit dem Gehäuse 202 ein beliebiges in der Technik bekanntes Mittel verwendet werden kann, zum Beispiel einander ergänzende Keile und Kerben. Gemäß einigen Aspekten kann außerdem eine Anordnung von Zungen und Schlitzen verwendet werden, die in der an denselben Anmelder abgetretenen US-Patentanmeldung mit dem Titel (Clutch Housing with Openings to Engage a Clutch Plate" von Sturgin et al., eingereicht am selben Tag wie die vorliegende Erfindung, beschrieben wird.

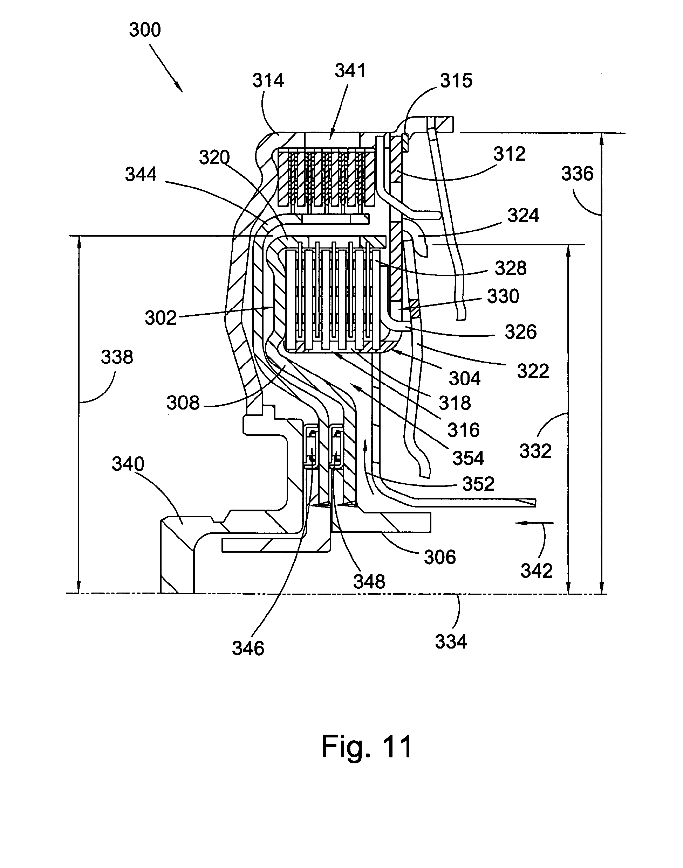

Fig. 11 ist eine Querschnittsansicht einer Doppelkupplungsbaugruppe 300 der vorliegenden Erfindung. Die Baugruppe 300 beinhaltet einen Ringträger 302 und ein Kupplungsgehäuse 304. Die folgende Beschreibung ist in Verbindung mit den Figuren 1 bis 11 zu sehen. Der Ringträger und das Kupplungsgehäuse sind bezüglich Funktion und Beschaffenheit dem in den Figuren 1 bis 3 beschriebenen Ringträger 10 bzw. dem in den Figuren 4 bis 7 beschriebenen Kupplungsgehäuse 100 ähnlich, und die obigen Erörterungen über den Ringträger 10 und das Kupplungsgehäuse 100 gelten allgemein auch für den Ringträger 302 bzw. das Kupplungsgehäuse 304. Der Ringträger 302 ist speziell über die Nabe 306 des Teils 308 mit einer Eingangswelle eines (nicht gezeigten) Getriebes verbunden. Zum Verbinden der Nabe 306 mit der Welle kann ein beliebiges in der Technik bekanntes Mittel verwendet werden. Der Teil 312 ist unter Verwendung eines beliebigen in der Technik bekannten Mittels, zum Beispiel durch einen Sprengring 315, mit dem Gehäuse 314 verbunden. Gemäß einigen Aspekten kann zusätzlich die in Verbindung mit den Figuren 4 bis 6 beschriebene Zungenanordnung verwendet werden. Das innere Kupplungspaket 316 ist durch ein beliebiges in der Technik bekanntes Mittel, zum Beispiel durch in den Figuren dargestellte Anordnungen von Keilen und Kerben, mit der Gehäusewand 318 und der Trägerwand 320 verbunden.

Die Baugruppe 300 beinhaltet eine innere Hebelfeder 322, die mit Verbindungselementen 324 verbunden ist. Gemäß einigen Aspekten haben die Elemente 324 die Form von Zungen oder anderen Vorsprüngen des Teils 312. Der Stützhebel 326 liegt an der Scheibe 328 an und ragt durch die Öffnungen 330 im Gehäuse. Da das Kupplungsgehäuse 304 durch einen Sprengring 315 gegenüber dem Gehäuse 314 in axialer Richtung fixiert ist, bietet das Kupplungsgehäuse 304 die erforderlichen Druckpunkte für die Feder. Die Elemente 324 befinden sich in einem radialen Abstand 332 von der Längsachse 334 der Baugruppe 300. Gemäß einigen Aspekten ist der Abstand 332 kleiner als der radiale Abstand 336. Gemäß einigen Aspekten ist der Abstand 332 im Wesentlichen gleich dem radialen Abstand 338 von der Achse 334 bis zur Trägerwand 320. Unter im Wesentlichen gleich ist hier zu verstehen, dass der Abstand 332 geringfügig kleiner, gleich oder geringfügig größer als der Abstand 338 sein kann. Somit braucht sich die Feder 322 nicht ganz bis zum Gehäuse 314 zu erstrecken, wodurch der Außendurchmesser der Feder verringert wird. Auf diese Weise können die Größe, das Gewicht und die Kosten der Feder vorteilhaft verringert werden. Es solle klar sein, dass die Baugruppe 300 nicht auf einen bestimmten Abstand 332 beschränkt ist, sondern dass der Abstand 332 entsprechend den Materialeigenschalten der Feder 322 und den Betriebsparametern der Baugruppe 300 gewählt werden kann.

Das Außengehäuse 314 ist mit der Nabe 340 verbunden, die wiederum mit einer (nicht gezeigten) Kurbelwelle eines (nicht gezeigten) Motors verbunden ist. Das Drehmoment vom Motor wird somit vom Gehäuse 314 über den Teil 312 zum Kupplungspaket 341 übertragen. Als Reaktion auf eine in Richtung 342 wirkende axiale Kraft drückt die Hebelfeder 322 gegen das Gehäuse 312, und die Elemente 324 verschieben den Stützhebel 326 in Richtung 342, um am Kupplungspaket 316 einzukuppeln. Somit wird das Drehmoment des Motors vom Kupplungsgehäuse 304 über das Kupplungspaket zum Ringträger 302 übertragen. Der Ringträger 302 überträgt das Drehmoment dann zur Ausgangsnabe. Es sollte klar sein, dass der Stützhebel 326 und das Element 324 nicht auf die in den Figuren gezeigten Formen, Größen und Anordnungen beschränkt sind und dass Geist und Geltungsbereich der beanspruchten Erfindung andere entsprechende Formen, Größen und Anordnungen beinhalten.

Die beiden Ringträger 302 und 344 können in der Baugruppe 300 in axialer Richtung verschoben werden. Deshalb wird zur Trennung des Außengehäuses 314 und des Trägers 344 das Axiallager 346 und zur Trennung der Träger 344 und 302 das Axiallager 348 bereitgestellt. Wenn also das Kupplungsgehäuse 314 und die Träger 302 und 344 durch axiale Kräfte in Richtung 342 gedrückt werden, trennen die Axiallager das Gehäuse und die Träger in der oben beschriebenen Weise und lassen die Ringträger 302 und 344 sowie das Kupplungsgehäuse 314 unabhängig voneinander um die Achse 334 rotieren.

Gemäß der obigen Beschreibung wird in Kupplungsbaugruppen wie der Baugruppe 300 eine Kühlflüssigkeit zur Kühlung der Kupplungspakete wie beispielsweise der Kupplungspakete 316 und 341 verwendet. Der Flüssigkeitsstrom 352 wird in den teilweise durch die Wand 318 gebildeten Hohlraum 354 eingeleitet. Löcher in der Wand 318, die den in den Figuren 4 bis 6 gezeigten Löchern 116 ähnlich sind, ermöglichen, dass der Flüssigkeitsstrom 352 durch die Wand 318 bis zu den Kupplungspaketen weiterströmen kann. Das heißt, die Flüssigkeit strömt durch die Öffnungen. Die durch die Rotation des Kupplungsgehäuses 100 erzeugte Fliehkraft beschleunigt in den Figuren 4 bis 6 den Flüssigkeitsstrom durch die Öffnungen 116. Entsprechend wird durch die Verlängerung der Zeitspanne während des Betriebs einer Kupplungsbaugruppe, während der das Kupplungsgehäuse rotiert, der Flüssigkeitsstrom durch die Öffnungen optimiert. Der verstärkte Flüssigkeitsstrom durch die Öffnungen verbessert die Kühlung der Kupplungspakete und optimiert die Lebensdauer und Leistung der Kupplungspakete. In Fig. 11 wird das Drehmoment des Motors direkt über das Gehäuse 314 und die Nabe 340 zum Träger 304 übertragen. Das heißt, wenn sich die Kurbelwelle und das Außengehäuse drehen, dreht sich auch der Träger 304 und erzeugt eine Zentrifugalkraft, die den Flüssigkeitsstrom unterstützt. Mit anderen Worten, der Flüssigkeitsstrom zum Kupplungspaket 316 ist von der Rotation einer Ausgangswelle der Baugruppe unabhängig. Die vorhergehende Anordnung optimiert die oben erwähnte Zeitspanne, da das Kupplungsgehäuse 304 immer rotiert, wenn der Motor arbeitet und die Kurbelwelle rotiert. Somit optimiert die vorhergehende Anordnung vorteilhaft den Ölstrom zu den Kupplungspaketen. Wie oben jedoch bereits beschrieben, rotiert der Träger in der Baugruppe 700 in Fig. 14 nur, wenn das Kupplungspaket eingekuppelt ist und das Drehmoment des Motors vom Gehäuse über die Kupplungsscheiben zum Träger übertragen wird.

Es sollte klar sein, dass die vorliegende Erfindung nicht auf die Verwendung mit der für die Baugruppe 300 dargestellten Anzahl, Art und Anordnung von Zusatzkomponenten beschränkt ist, sondern dass bei der vorliegenden Erfindung andere Anzahlen, Arten und Anordnungen von Zusatzkomponenten verwendet werden können.

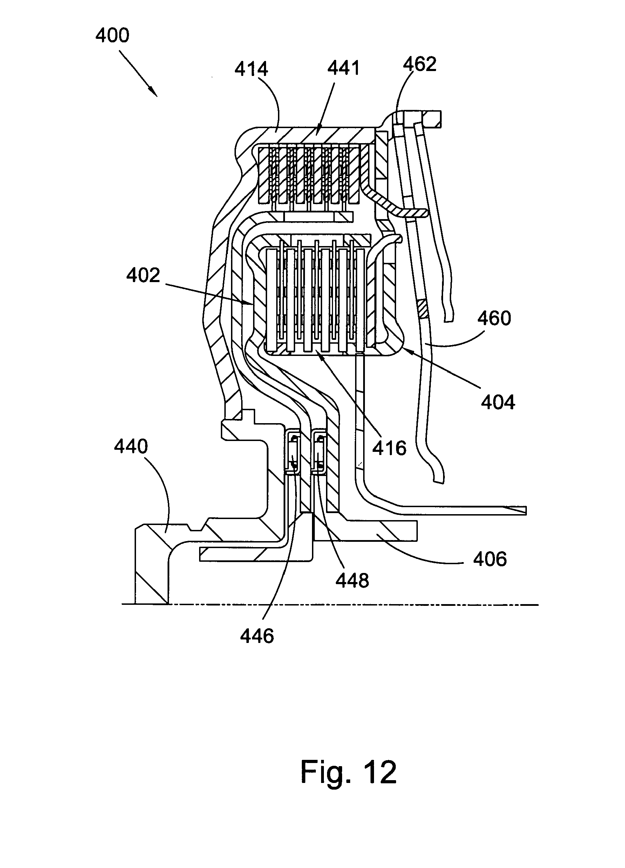

Fig. 12 ist eine Querschnittsansicht einer Doppelkupplungsbaugruppe 400 der vorliegenden Erfindung. Die Baugruppe 400 beinhaltet einen Ringträger 402 und ein Kupplungsgehäuse 404. Die folgende Beschreibung ist in Verbindung mit den Figuren 1 bis 12 zu sehen. Der Ringträger 402 ist mit der Ausgangswelle 406 verbunden. Das Kupplungsgehäuse 404 ist mit dem Außengehäuse 414 verbunden. Das innere Kupplungspaket 416 ist mit dem Kupplungsgehäuse 404 und dem Ringträger 402 verbunden. Das Außengehäuse 414 ist mit der Nabe 440 verbunden, die wiederum mit einer (nicht gezeigten) Kurbelwelle für einen (nicht gezeigten) Motor verbunden ist. Das Kupplungspaket 441 kuppelt am Außengehäuse 414 ein. Die Komponenten der Baugruppe 400 sind bis auf die Hebelfeder 460 denen der Baugruppe 300 in Fig. 1 in Funktion und Anordnung ähnlich, und die obigen Erörterungen solcher Komponenten in der Baugruppe 300 gelten auch für Fig. 12. Insbesondere beinhaltet die Baugruppe 400 keinen Sprengring zur axialen Fixierung des Gehäuses 404. Stattdessen wird das Ende 462 in axialer Richtung durch das Gehäuse selbst fixiert.

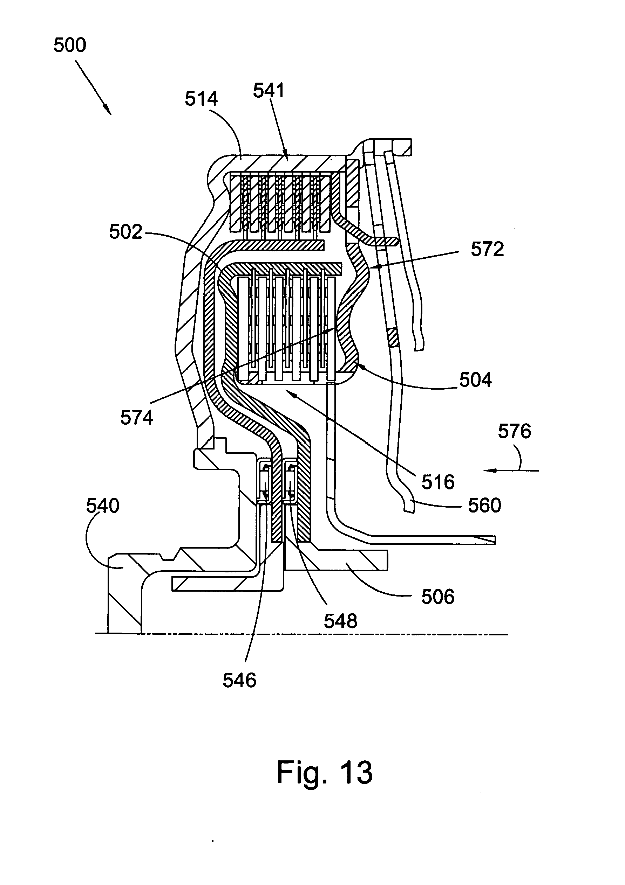

Fig. 13 ist eine Querschnittsdarstellung einer Doppelkupplungsbaugruppe 500 der vorliegenden Erfindung. Die folgende Beschreibung ist in Verbindung mit den Figuren 1 bis 13 zu sehen. Die Baugruppe 500 beinhaltet einen Ringträger 502 und ein Kupplungsgehäuse 504. Der Ringträger 502 ist mit der Ausgangswelle 506 verbunden. Das Kupplungsgehäuse 504 ist mit dem Außengehäuse 514 verbunden. Das innere Kupplungspaket 516 ist mit dem Kupplungsgehäuse 504 und dem Ringträger 502 verbunden. Das Außengehäuse 514 ist mit der Nabe 540 und diese wiederum mit einer (nicht gezeigten) Kurbelwelle eines (nicht gezeigten) Motors verbunden. Das Kupplungspaket 541 kuppelt am Außengehäuse 514 ein. Die Hebelfeder 560 kuppelt am Außengehäuse 514 ein. Die Komponenten der Baugruppe 500 sind den entsprechenden Komponenten der Baugruppe 400 in Fig. 12 in Funktion und Anordnung bis auf die im Folgenden beschriebenen Besonderheiten ähnlich, und die obigen Erörterungen bezüglich solcher Komponenten in der Baugruppe 400 gelten auch für Fig. 13. Anstelle eines separaten Stützhebels wie beispielsweise des Stützhebels 326 in Fig. 11 enthält das Gehäuse 504 einen Stützhebelteil 572, der an der Feder 560 und an dem mit dem Kupplungspaket 516 verbundenen Kupplungsteil 574 einkuppelt. Wenn eine axiale Kraft in Richtung 576 auf die Feder 560 einwirkt, kuppelt die Feder 560 am Teil 572 ein und verschiebt den Teil 574 in Richtung 576, um das Kupplungspaket 516 einzukuppeln. Die für den Träger 504 gezeigte Anordnung macht einen separaten Stützhebel überflüssig und verringert somit die Anzahl der Teile und die Komplexität der Baugruppe 500.

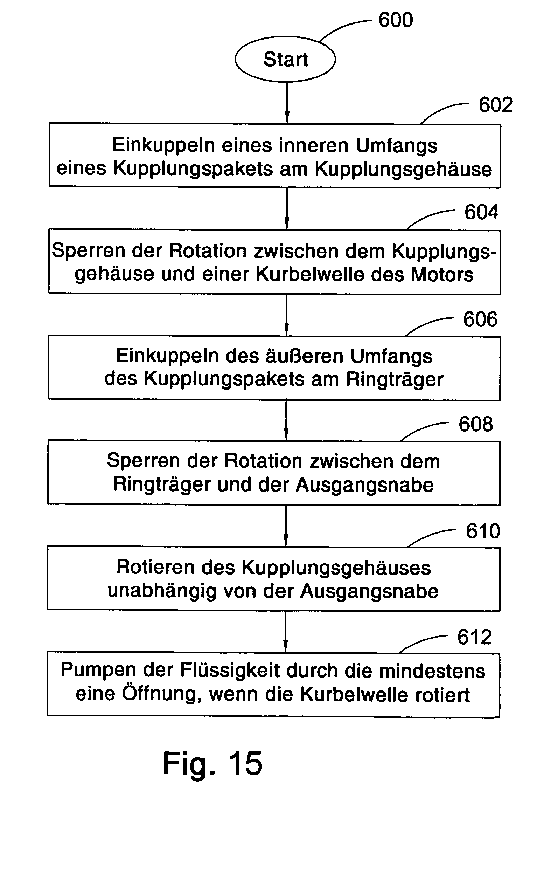

Fig. 15 ist ein Ablaufplan, der ein Verfahren gemäß der vorliegenden Erfindung zur Optimierung eines Flüssigkeitsstroms durch ein Kupplungsgehäuse in einer Kupplungsbaugruppe in einem Fahrzeug veranschaulicht. Obwohl das Verfahren in Fig. 15 zur Verdeutlichung als Folge nummerierter Schritte dargestellt ist, sollte, wenn nicht ausdrücklich erwähnt, von der Nummerierung keine bestimmte Reihenfolge abgeleitet werden. Das Verfahren beginnt mit Schritt 600. In Schritt 602 kuppelt ein innerer Umfang eines Kupplungspakets am Kupplungsgehäuse ein. In Schritt 604 wird die Rotation zwischen dem Kupplungsgehäuse und einer Kurbelwelle des Motors gesperrt. Gemäß einigen Aspekten umfasst die Baugruppe einen Ringträger und eine Ausgangsnabe, und das Kupplungspaket umfasst ferner einen äußeren Umfang. Dann kuppelt in Schritt 606 der äußere Umfang des Kupplungspakets am Ringträger ein, und in Schritt 608 die Rotation zwischen dem Ringträger und der Ausgangsnabe gesperrt. Gemäß einigen Aspekten umfasst die Baugruppe ferner eine Kühlflüssigkeit, der Motor umfasst eine Kurbelwelle, und das Kupplungsgehäuse umfasst eine Wand, die am inneren Umfang einkuppelt und mindestens eine Öffnung aufweist. In Schritt 610 rotiert dann das Kupplungsgehäuse unabhängig von der Ausgangsnabe, und in Schritt 612 wird die Flüssigkeit immer durch die mindestens eine Öffnung gepumpt, wenn sich die Kurbelwelle dreht.

In den Doppelkupplungsbaugruppen 200, 300, 400 und 500 (Fig. 7 bzw. Figuren 11 bis 13) sind entsprechende Kupplungsgehäuse und Träger der vorliegenden Erfindung dargestellt. Es sollte jedoch klar sein, dass die Kupplungsgehäuse und Träger der vorliegenden Erfindung nicht auf Doppelkupplungsbaugruppen beschränkt sind. Zum Beispiel können ein Kupplungsgehäuse und ein Träger der vorliegenden Erfindung auch in einer (nicht gezeigten) Einzelkupplungsbaugruppe, zum Beispiel in einer Anfahrkupplung, verwendet werden.

Es sollte klar sein, dass zur Justierung der in den Figuren dargestellten Kupplungsbaugruppen beliebige in der Technik bekannte Mittel verwendet werden können. Gemäß einigen Aspekten kann zusätzlich das Verfahren verwendet werden, das in der an denselben Anmelder abgetretenen US-Patentanmeldung mit dem Titel "Dual Clutch Pack Dual Operating Clutch and Method for Adjusting Same" von Uler et al., eingereicht am selben Tag wie die vorliegende Anmeldung, beschrieben wird.

Somit zeigt sich, dass die Aufgaben der vorliegenden Erfindung wirksam gelöst werden, obwohl dem Fachmann Modifikationen und Änderungen der Erfindung geläufig sein sollten, die in Geist und Geltungsbereich der beanspruchten Erfindung enthalten sind. Ferner ist klar, dass die vorhergehende Beschreibung zur Veranschaulichung der vorliegenden Erfindung dient und nicht als Einschränkung zu verstehen ist. Deshalb sind andere Ausführungsarten der vorliegenden Erfindung möglich, ohne von Geist und Geltungsbereich der vorliegenden Erfindung abzuweichen.

## Patentansprüche

1. Ringträger, der Folgendes umfasst:
eine im Wesentlichen zylindrische Wand, die so angeordnet ist, das sie mindestens an einem Teil eines äußeren Umfangs eines Kupplungspakets einer Kupplungsbaugruppe für ein Fahrzeug einkuppelt.

2. Träger nach Anspruch 1, der ferner eine Ausgangsnabe umfasst.

3. Träger nach Anspruch 1, wobei das Kupplungspaket einen inneren Umfang und die Baugruppe ferner ein Kupplungsgehäuse umfasst, das so angeordnet ist, dass es an dem inneren Umfang einkuppelt.

4. Träger nach Anspruch 3, wobei die Baugruppe ferner ein Außengehäuse umfasst und das Kupplungsgehäuse mit dem Außengehäuse verbunden ist.

5. Kupplungsgehäuse, das Folgendes umfasst:
eine im Wesentlichen zylindrische Wand, die so angeordnet ist, dass sie mindestens an einem Teil eines inneren Umfangs eines Kupplungspakets einer Kupplungsbaugruppe für ein Fahrzeug einkuppelt.

6. Kupplungsgehäuse nach Anspruch 5, bei dem die zylindrische Wand ferner mindestens eine Öffnung umfasst.

7. Kupplungsgehäuse nach Anspruch 6, wobei die Baugruppe eine erste Flüssigkeit und eine rotierende Ausgangsnabe umfasst und das Kupplungsgehäuse so angeordnet ist, dass es die erste Flüssigkeit unabhängig von der Rotation der Ausgangsnabe durch die mindestens eine Öffnung pumpt.

8. Kupplungsgehäuse nach Anspruch 6, wobei das Fahrzeug die Kurbelwelle eines Motors umfasst, die Baugruppe eine zweite Flüssigkeit umfasst und ein Außengehäuse mit der Kurbelwelle verbunden ist, das Kupplungsgehäuse mit dem Außengehäuse verbunden ist und das Kupplungsgehäuse so angeordnet ist, dass es die zweite Flüssigkeit durch die mindestens eine Öffnung pumpt, wenn das Außengehäuse rotiert.

9. Kupplungsgehäuse nach Anspruch 5, wobei das Kupplungsgehäuse als inneres Kupplungsgehäuse für die Baugruppe angeordnet ist.

10. Kupplungsbaugruppe für ein Fahrzeug, das Folgendes umfasst:
ein Kupplungsgehäuse, das so angeordnet ist, dass es an einem inneren Umfang eines Kupplungspakets einkuppelt; und
einen Träger, der so angeordnet ist, dass er an einem äußeren Umfang des Kupplungspakets einkuppelt.

11. Baugruppe nach Anspruch 10, bei welcher der Träger ferner eine im Wesentlichen zylindrische erste Trägerwand umfasst, wobei die erste Trägerwand so angeordnet ist, dass sie am äußeren Umfang einkuppelt.

12. Baugruppe nach Anspruch 10, bei welcher das Kupplungsgehäuse ferner eine im Wesentlichen zylindrische Gehäusewand umfasst, die so angeordnet ist, dass sie am inneren Umfang einkuppelt.

13. Baugruppe nach Anspruch 12, die ferner Folgendes umfasst: eine erste Flüssigkeit, wobei der Träger ferner eine drehbare Ausgangsnabe und die Gehäusewand ferner mindestens eine Öffnung umfasst und das Kupplungsgehäuse so angeordnet ist, dass es die erste Flüssigkeit unabhängig von der Rotation der Ausgangsnabe durch die mindestens eine Öffnung pumpt.

14. Baugruppe nach Anspruch 12, wobei das Fahrzeug die Kurbelwelle eines Motors und die Baugruppe eine zweite Flüssigkeit und ein mit der Kurbelwelle verbundenes erstes Außengehäuse umfasst und das Kupplungsgehäuse mit dem ersten Außengehäuse verbunden ist, wobei das Kupplungsgehäuse so angeordnet ist, dass es die zweite Flüssigkeit durch die mindestens eine Öffnung pumpt, wenn das erste Außengehäuse rotiert.

15. Baugruppe nach Anspruch 10, wobei das Fahrzeug einen Motor umfasst und das Kupplungsgehäuse so angeordnet ist, dass es ein Drehmoment vom Motor zum Kupplungspaket überträgt.

16. Baugruppe nach Anspruch 15, wobei das Fahrzeug ferner die Kurbelwelle eines Motors und die Baugruppe ferner ein mit der Kurbelwelle verbundenes zweites Außengehäuse umfasst und das Kupplungsgehäuse ferner eine mit dem zweiten Außengehäuse verbundene erste ringförmige Gehäusescheibe umfasst.

17. Baugruppe nach Anspruch 16, bei welcher die erste ringförmige Gehäusescheibe ferner mindestens einen Verbindungspunkt und die Baugruppe ferner Folgendes umfasst:
Einen am ersten Kupplungspaket und einer ersten Hebelfeder eingekuppelten Stützhebel, wobei die erste Hebelfeder an mindestens einem Verbindungspunkt an einem äußeren Umfang eingekuppelt ist und die erste Feder so angeordnet ist, dass sie am Stützhebel einkuppelt.

18. Baugruppe nach Anspruch 10, die ferner Folgendes umfasst: eine zweite Hebelfeder; und wobei das Kupplungsgehäuse ferner eine zweite ringförmige Scheibe mit einem Stützhebelteil, der so angeordnet ist, dass er an der zweiten Hebelfeder einkuppelt, und einen Kupplungsteil umfasst, der so angeordnet ist, dass er am Kupplungspaket einkuppelt.

19. Baugruppe nach Anspruch 10, bei der das Kupplungsgehäuse ein inneres Kupplungsgehäuse ist.

20. Verfahren zum Optimieren des Flüssigkeitsstroms durch ein Kupplungsgehäuse in einer Kupplungsbaugruppe in einem Fahrzeug, wobei das Verfahren Folgendes umfasst:
Einkuppeln eines inneren Umfangs eines Kupplungspakets an einem Kupplungsgehäuse; und
Sperren der Rotation zwischen dem Kupplungsgehäuse und einer Kurbelwelle des Motors.

21. Verfahren nach Anspruch 20, wobei die Baugruppe einen Ringträger mit einer Ausgangswelle und das Kupplungspaket ferner einen äußeren Umfang umfasst;
Wobei das Verfahren ferner Folgendes umfasst:
Einkuppeln des äußeren Umfangs am Ringträger; und
Sperren der Rotation zwischen dem Ringträger und der Ausgangsnabe.

22. Verfahren nach Anspruch 21, wobei die Baugruppe ferner eine Kühlflüssigkeit, der Motor eine Kurbelwelle und das Kupplungsgehäuse eine Wand umfasst, die am inneren Umfang einkuppelt und mindestens eine Öffnung aufweist;
Wobei das Verfahren ferner Folgendes umfasst:
Rotation des Kupplungsgehäuses unabhängig von der Ausgangsnabe; und
Pumpen der Flüssigkeit durch die mindestens eine Öffnung, wenn die Kurbelwelle rotiert.
